# FASCICULE DE BREVET EUROPEEN

(11) **EP 2 958 725 B1**
(45) Date de publication et mention de la délivrance du brevet: **04.05.2016**
(21) Numéro de dépôt: 14715038.7
(22) Date de dépôt: 20.02.2014
(51) Int. Cl.: C08L 99/00, C08L 89/00, B29L 31/00, B29K 1/00, B29C 43/00, B29C 43/20

(54) **PROCÉDÉ DE PRÉPARATION D'UNE POUDRE DE MACROALGUES BRUNES ET PROCÉDÉ DE FABRICATION D'OBJETS RIGIDES À PARTIR DE LADITE POUDRE**
VERFAHREN ZUR HERSTELLUNG EINES BRAUNEN MAKROALGENPULVERS UND VERFAHREN ZU HERSTELLUNG STARRER OBJEKTE AUS DIESEM PULVER
METHOD FOR PRODUCING A BROWN MACROALGAE POWDER AND METHOD FOR PRODUCING RIGID OBJECTS FROM SAID POWDER

(30) Priorité: 20.02.2013 FR 1351467
(43) Date de publication de la demande: 30.12.2015
(73) Titulaire: Algopack, 35400 Saint Malo (FR)
(72) Inventeur: LUCAS, Rémy, F-35400 Saint Malo (FR)
(74) Mandataire: Ermeneux, Bertrand
(86) Numéro de dépôt international: PCT/FR2014/050353
(87) Numéro de publication internationale: WO 2014/128411

(56) Documents cités:
- WO-A1-2011/112115
- WO-A1-2012/114045
- JP-A- S6 394 952

## Description

### Domaine de l'invention

Le domaine de l'invention est celui des matériaux renouvelables et biodégradables.

Plus précisément, l'invention concerne un procédé de préparation d'une poudre à partir de macroalgues et un procédé de fabrication d'objets rigides à partir de cette poudre.

L'invention trouve notamment une application dans la production de produits manufacturés, tels que des supports publicitaires, des supports de communication, des panneaux signalétiques, des coques de téléphone ou des bouchons.

### 1. Etat de la technique

Les macroalgues brunes, encore appelées Phéophycées, constituent la classe d'algue la plus abondante dans les eaux froides ou tempérées du globe.

Elles demeurent cependant une ressource végétale largement sous-exploitée.

Il est connu de traiter des macroalgues brunes dans le but d'extraire de l'alginate destiné à l'industrie agroalimentaire, à l'industrie pharmaceutique ou à l'industrie cosmétique, par exemple.

On connaît par ailleurs du document WO2011/112115 A1 un procédé de préparation d'un gel alimentaire à base d'algues brunes destiné à être consommé dans le cadre d'un régime amincissant.

On connait également des procédés d'extraction de substances actives agissant comme produit phytosanitaire contenues dans les macroalgues brunes.

Plus récemment, on a proposé de produire du bioéthanol à partir de macroalgues brunes par fermentation bactérienne de certains sucres présents dans la paroi de ces algues.

Les macroalgues brunes sont donc jusqu'à présent exploitées uniquement pour en extraire les alginates et certains fucanes sulfatés contenus dans leurs parois.

Après extraction, les fucanes sulfatés et/ou les alginates résiduels et le squelette de la paroi, formé essentiellement de cellulose et d'hémicellulose, constituent actuellement un déchet pour les entreprises industrielles qui exploitent des macroalgues brunes, faute de débouché. Ces dernières doivent en particulier assurer un stockage de ce déchet et son élimination par compostage ou épandage agricole, ce qui présente un coût.

Il existe donc une attente d'une solution de valorisation de ce déchet.

Le document WO2012/114045 A1 décrit un procédé de préparation d'une poudre d'algues brune broyée selon une granulométrie comprise entre 5 et 100 µm, dans le but de réaliser une pâte pour fabriquer du papier.

On a par ailleurs proposé, par exemple dans le document US2010/0272940, de substituer dans des produits manufacturés en plastique une partie de la matière plastique synthétique par de la matière provenant d'algues.

Ces techniques de substitution connues du plastique par des algues privilégient cependant l'utilisation de microalgues qui sont notamment plus riches en cellulose que les macroalgues. Elles présentent en outre l'inconvénient de ne permettre de remplacer que partiellement de la matière plastique synthétique par de la matière algale.

### 2. Objectifs de l'invention

L'invention a donc notamment pour objectif de pallier les inconvénients de l'état de la technique cités ci-dessus.

Plus précisément l'invention a pour objectif de fournir une matière première totalement ou au moins majoritairement produite à partir de macroalgues brunes qui puisse être mise en oeuvre pour fabriquer des objets manufacturés rigides.

L'invention a notamment pour objectif particulier, dans un mode de réalisation particulier de l'invention, de proposer cette matière première sous forme d'une poudre de qualité constante et de propriétés homogènes.

Un objectif de l'invention est également de fournir une technique de fabrication d'objets manufacturés à partir de macroalgues brunes qui soit simple à mettre en oeuvre et fiable.

Un autre objectif de l'invention est de fournir une telle technique de fabrication qui soit d'un coût d'exploitation réduit.

Encore un objectif de l'invention est de valoriser un déchet issu d'une exploitation des macroalgues brunes dans des filières industrielles.

### 3. Exposé de l'invention

Ces objectifs, ainsi que d'autres qui apparaitront par la suite sont atteints à l'aide d'un procédé de préparation d'une poudre de macroalgues brunes, destinée à la fabrication d'objets manufacturés rigides.

Dans le cadre de l'invention, on entend par l'expression "objet rigide" un objet qui ne plie pas et qui résiste aux efforts de déformation et qui en conséquence se distingue des objets souples ou flexibles.

Selon l'invention, un tel procédé de préparation comprend les étapes suivantes dans cet ordre :
- récolte et lavage desdites macroalgues brunes à l'eau douce ou à l'eau de mer, de sorte à éliminer le sable et les éventuels coquillages ou débris de roche ;
- traitement desdites macroalgues brunes par des acides faibles, tels que l'acide acétique ou l'acide citrique, par immersion desdites macroalgues dans un bain d'acide faible et/ou par pulvérisation dudit acide faible sur lesdites macroalgues ;
- broyage desdites macroalgues brunes ;
- filtration, de sorte à extraire un résidu d'algues non solubilisé, ou en d'autres termes un résidu solide ;
- broyage dudit résidu puis séchage dudit résidu pendant 5 à 48 heures à une température comprise entre 30°C et 60°C, de sorte à obtenir une poudre de granulométrie comprise entre 0,5 et 1,5 millimètre et présentant un taux d'humidité résiduelle inférieur ou égal à 45 %, de préférence inférieur ou égal à 26%.

Ainsi, de façon inédite, l'invention propose de préparer une matière première sous forme de poudre essentiellement à partir de macroalgues brunes.

Il convient par ailleurs de noter que le procédé de préparation d'une poudre selon l'invention est particulièrement simple et économique.

Dans le cadre de l'invention, on entend le terme acide faible dans son acception générale. Il s'agit donc d'un acide partiellement insoluble dans l'eau. Dans une variante de l'invention, il peut également être envisagé de traiter les macroalgues brunes en utilisant des acides dilués dans l'eau.

Il convient de noter que le séchage du résidu peut être réalisé dans un four, par exemple un four rotatif, un sécheur ou une étuve. Le fait de maintenir la température du résidu entre 30 et 60°C pendant la phase de séchage est particulièrement avantageux, car ainsi on n'altère pas les propriétés du résidu.

Par ailleurs le fait d'abaisser le taux d'humidité de la poudre en dessous de 26% permet sa conservation pendant plusieurs mois sans quelle se délite dans le cas d'une reprise d'humidité.

Bien entendu la durée de séchage nécessaire pour obtenir une poudre dont le taux d'humidité est inférieur ou égal à 26% dépend du taux d'humidité initial du résidu sur lequel on opère le séchage.

Préférentiellement, ledit résidu d'algues non solubilisé extrait présente un taux d'humidité supérieur ou égal à 30%.

Un résidu trop sec risque en effet de se transformer après broyage et séchage en une poudre non homogène.

Avantageusement, lesdites macroalgues sont choisies parmi les algues brunes de l'ordre des laminariales ou de l'ordre des fucales.

Il peut dans certains cas s'agir d'un mélange de laminariales et/ou de fucales.

De préférence, lesdites macroalgues sont choisies parmi les espèces laminaria digitata, ascophyllum nodosum et les espèces du genre fucus.

Dans des variantes de l'invention, lesdites macroalgues peuvent être de l'espèce laminaria sacchoriza ou laminaria hyperborea ou du genre lessonia.

Selon un aspect particulier de l'invention, le taux d'humidité résiduel de ladite poudre est compris entre 7 et 45%.

Les inventeurs ont en effet constaté qu'un taux d'humidité résiduel au moins égal à 7% confère de la fluidité à la matière constitutive de la poudre ce qui améliore sa capacité à être mise en forme.

Dans un mode de réalisation particulier de l'invention, le taux d'humidité résiduel de ladite poudre est compris entre 26,1 et 45%.

Dans au moins un mode de réalisation particulier de l'invention, la densité de ladite poudre est comprise entre 0,4 et 0,8.

On obtient ainsi une matière légère.

Selon un mode de réalisation particulier de l'invention, le procédé de préparation d'une poudre de macroalgues brunes décrit ci-dessus comprend une étape d'ajout d'un colorant ou de pigments colorés audit résidu lors de l'étape de broyage dudit résidu dans des proportions comprises entre 0,5 et 5% en masse de la masse totale dudit résidu.

On obtient ainsi une poudre colorée dans la masse.

Dans d'autres modes de réalisation de l'invention, il peut également être prévu de blanchir la poudre en ajoutant un acide, par exemple de l'eau de javel, et/ou une enzyme lors de l'étape de broyage et, le cas échéant, un tensioactif destiné à disperser les éléments colorants naturels des macroalgues, ou chloroplastes.

De façon avantageuse, le procédé de préparation d'une poudre de macroalgues brunes décrit ci-dessus comprend une étape d'ajout audit résidu, lors de l'étape de broyage dudit résidu, d'un agent absorbant d'odeur, tel que des particules de charbon actif, de zéolithe ou de silice poreuse, ou d'un agent odorant, telle que la vanilline par exemple, apte à supprimer ou à masquer l'odeur dudit résidu dans des proportions comprises entre 0,5 et 5% en masse de la masse totale dudit résidu.

On retire ainsi à la poudre son odeur iodée prégnante, qui peut être entêtante ou désagréable.

Dans un mode de réalisation particulier de l'invention, le procédé de préparation d'une poudre de macroalgues brunes selon l'invention comprend une étape d'ajout audit résidu, lors de ladite étape de broyage, de 0,3 à 2% en masse d'albumine rapportée à la masse totale dudit résidu.

On augmente ainsi la rigidité des particules de poudre.

Dans un mode de réalisation particulier de l'invention, le procédé de préparation d'une poudre de macroalgues brunes tel que décrit ci-dessus comprend une étape de mélange, par barattage, desdites macroalgues traitées par des acides faibles ou desdites macroalgues broyées avec au moins un additif appartenant au groupe comprenant au moins :
- colorant ;
- pigment coloré ;
- agent absorbant d'odeur ;
- agent odorant ;
- albumine ;
- acide ;
- enzyme ;
- tensio-actif.

La présente invention concerne également un procédé de fabrication d'un objet rigide à partir d'une poudre produite à partir de macroalgues brunes traitées par des acides faibles, ladite poudre présentant une granulométrie comprise entre 0,5 et 1,5 millimètre et un taux humidité résiduelle inférieur ou égal à 45%.

Selon l'invention, un tel procédé de fabrication d'un objet rigide à partir d'une poudre produite à partir de macroalgues brunes comprend une étape de thermo-compression de ladite poudre dans un moule, ladite poudre étant portée à une température comprise entre 50 et 180°C, de préférence entre 60 et 160°C, et soumise à une pression comprise entre 400 et 4000 bars pendant 50 à 200 secondes.

L'invention propose ainsi, de façon astucieuse, de former des objets rigides à partir de poudre d'algues compactée, ce qui est particulièrement simple et efficace. Notamment, grâce à l'humidité présente dans la poudre, les particules de poudres peuvent s'agglomérer de façon fluide et homogène et se lier solidement entre elles.

Il convient de noter que la température et la durée d'application de la pression peuvent être optimisées en fonction de l'épaisseur et de la taille de l'objet fabriqué.

Dans au moins un mode de réalisation avantageux de l'invention, le procédé de fabrication décrit ci-dessus comprend une étape d'application au moins partielle d'une laque hydrofuge sur la surface de la poudre thermo-compressée.

On protège ainsi le corps de l'objet d'une reprise d'humidité.

### 4. Liste des figures

D'autres caractéristiques et avantages de l'invention apparaitront plus clairement à la lecture de la description suivante d'un mode de réalisation de l'invention, donné à titre de simple exemple illustratif et non limitatif, et des dessins annexés parmi lesquels :
- la figure 1 est une représentation synoptique sous forme de diagramme des étapes d'un exemple de procédé de préparation d'une poudre à partir de macroalgues brunes selon l'invention ;
- la figure 2 est une vue d'une poudre obtenue par le procédé de préparation présenté en référence à la figure 1 ;
- la figure 3 présente un presse de thermocompression utilisée pour former un bouchon à partir de poudre de macroalgues brunes ;
- la figure 4 est une vue schématique d'un bouchon fabriqué en thermo-compressant une poudre de macroalgues brunes à l'aide de la presse présentée en référence à la figure 3.

### 5. Description d'un exemple détaillé de l'invention

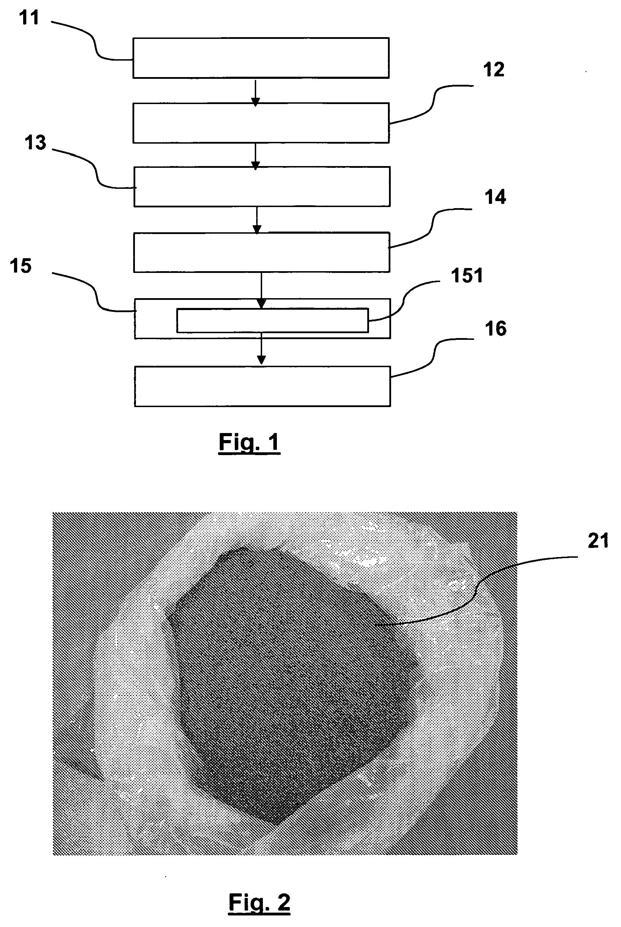

On a représenté sous forme de schéma-bloc, en figure 1, les étapes d'un exemple de procédé de préparation d'une poudre destinée à la fabrication d'objets manufacturés rigides, à partir d'un mélange de laminaria digitata et d'ascophyllum nodosum, encore appelé goémon noir.

Après récolte de ces macroalgues brunes sur l'estran, celles-ci sont transformées sur une ligne de production d'une usine de préparation de poudre, où elles sont dans une première étape lavées par ruissellement d'eau de mer pour ôter le sable et les coquillages enchevêtrés dans les thalles d'algues (étape 11).

On traite ensuite ces macroalgues par de l'acide acétique, en les immergeant dans un bain d'acide acétique (étape 12).

Dans ce mode de réalisation particulier de l'invention, on traite environ 70% en poids de laminaria digitata et 30% en poids d'ascophyllum nodosum.

Dans d'autres modes de réalisation de l'invention, il peut être envisagé de traiter uniquement des laminaria digitata ou des ascophyllum nodosum ou un mélange de ces deux espèces de macroalgues dans des proportions respectives quelconques.

On prélève les algues traitées et on les introduit dans un broyeur à couteaux où elles sont écrasées et déchiquetées jusqu'à obtenir une pâte humide (étape 13).

Cette pâte humide est déversée sur un tamis filtrant, où l'acide acétique enrichi de constituants organiques solubilisés est évacué au travers des mailles du tamis dans une étape 14. On conserve le résidu solide d'algues ainsi obtenu.

Dans une variante de ce mode de réalisation, un résidu d'algues traité à l'acide faible peut être obtenu auprès d'une usine de production d'alginates, dans laquelle on extrait les alginates par précipitation des sels d'acide alginique solubilisés contenus dans un jus de lixiviation tiré d'un broyat d'algues brunes exposées à un milieu acide. Le résidu d'algues traité à l'acide faible constitue en effet un déchet de ces usines.

L'utilisation de ce déchet permet notamment de préparer une poudre de macroalgues brunes à un prix particulièrement avantageux.

Lors d'une étape 15, le résidu solide d'algues est broyé puis séché dans un tunnel de séchage à air chaud pendant 6 heures sous une température de 50°C.

Lors du broyage du résidu, on lui ajoute progressivement 1% en masse, rapportée à la masse totale du résidu, de fines de charbon actif pour masquer l'odeur qui émane de celui-ci (étape 151).

À la sortie du tunnel de séchage, la poudre d'algues obtenue est transportée sur un convoyeur à bande ajourée vibrant, de maille 1/2 pouce, au travers duquel elle est calibrée sous forme d'une poudre de granulométrie égale à 1±0,5mu et ensachée (étape 16). La figure 2 est une vue de dessus d'un sachet ouvert de poudre 21 obtenue par le procédé de préparation selon l'invention.

Chaque ligne de production de l'usine permet ainsi de préparer en continu environ 3 tonnes de poudre par heure, à un coût intéressant.

On note que dans ce mode de réalisation particulier de l'invention le taux d'humidité résiduel de la poudre est d'environ 21%.

La poudre ainsi obtenue est directement utilisable pour fabriquer des objets manufacturés.

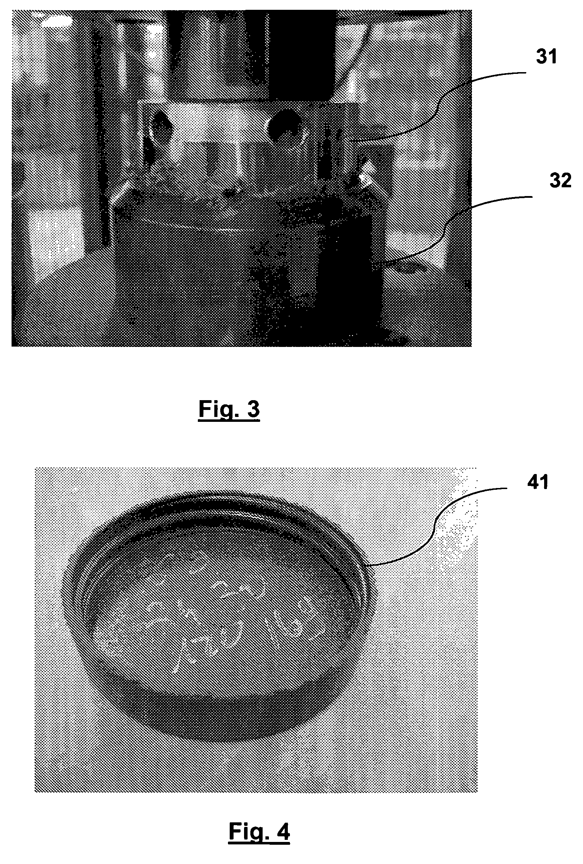

On a illustré sur la figure 3 une presse de thermocompression 31 développant une pression de 12 tonnes/cm² permettant de fabriquer des bouchons filetés de 54 mm de diamètre à partir d'une poudre de macroalgues brunes.

Comme on peut le voir sur la figure 3, la presse 31 présente une tête de piston équipée d'une empreinte chauffée à 105°C par induction. Par souci de maitrise du process de fabrication la température de l'empreinte du piston est régulée.

La poudre est dosée automatique par un débit d'aspiration dans le moule inférieur 32 porté à une température régulée de 105°C.

Dans cet exemple, on dose 16g de poudre dans le moule et on exerce sur la poudre une force de 12 tonnes avec la tête de piston pendant un temps de cycle de 120s, de sorte à porter la température de la poudre à environ 70°C.

On obtient un bouchon 41 d'une masse d'environ 14g illustré de façon schématique sur la figure 4, dans une vue en perspective.

On pulvérise ensuite une laque hydrofuge sur le bouchon afin de le rendre insensible à l'humidité.

Dans une étape suivante, la surface du bouchon est décorée par tampographie ou par impression numérique.

On note qu'avantageusement, lors de l'utilisation d'un outillage à empreinte, la température des empreintes est choisie entre 75 et 110°C.

Il peut également être envisagé, sans sortir du cadre de l'invention, d'appliquer les étapes successives suivantes pour préparer une poudre d'un mélange de macroalgues brunes et rouges ou une poudre d'un mélange de macroalgues brunes et vertes ou une poudre d'un mélange de macroalgues brunes, rouges et vertes, ou d'une poudre de macroalgues rouges ou d'une poudre de macroalgues vertes :
- lavage desdites macroalgues ou dudit mélange de macroalgues ;
- traitement desdites macroalgues ou dudit mélange de macroalgues par des acides faibles, tels que l'acide acétique ou l'acide citrique, par immersion desdites macroalgues ou dudit mélange de macroalgues dans un bain d'acide faible et/ou par pulvérisation dudit acide faible sur lesdites macroalgues ou sur ledit mélange de macroalgues ;
- broyage desdites macroalgues ou dudit mélange de macroalgues;
- filtration, de sorte à extraire un résidu d'algues non solubilisé ;
- broyage dudit résidu puis séchage dudit résidu pendant 5 à 48 heures à une température comprise entre 30°C et 60°C, de sorte à obtenir une poudre de granulométrie comprise entre 0,5 et 1,5 millimètre et présentant un taux d'humidité résiduelle inférieur ou égal à 45 %, de préférence inférieur ou égal à 26%.

## Revendications

1. Procédé de préparation d'une poudre de macroalgues brunes, destinée à la fabrication d'objets rigides, **caractérisée en ce qu'**il comprend les étapes suivantes dans cet ordre :
- récolte et lavage desdites macroalgues brunes ;
- traitement desdites macroalgues brunes par des acides faibles, tels que l'acide acétique ou l'acide citrique, ou des acides dilués dans l'eau par immersion desdites macroalgues dans un bain d'acide faible ou d'acide dilué dans l'eau et/ou par pulvérisation dudit acide faible ou dudit acide dilué dans l'eau sur lesdites macroalgues ;
- broyage desdites macroalgues brunes ;
- filtration, de sorte à extraire un résidu d'algues non solubilisé ;
- broyage dudit résidu puis séchage dudit résidu pendant 5 à 48 heures à une température comprise entre 30°C et 60°C, de sorte à obtenir une poudre de granulométrie comprise entre 0,5 et 1,5 millimètre et présentant un taux d'humidité résiduelle inférieur ou égal à 45 %, de préférence inférieur ou égal à 26%.

2. Procédé de préparation d'une poudre de macroalgues brunes selon la revendication 1, **caractérisé en ce que** ledit résidu d'algues non solubilisé extrait présente un taux d'humidité supérieur ou égal à 30%.

3. Procédé de préparation d'une poudre de macroalgues brunes selon l'une quelconque des revendications 1 et 2, **caractérisé en ce que** lesdites macroalgues sont choisies parmi les algues brunes de l'ordre des laminariales ou de l'ordre des fucales.

4. Procédé de préparation d'une poudre de macroalgues brunes selon la revendication 3, **caractérisé en ce que** lesdites macroalgues sont choisies parmi les espèces laminaria digitata, ascophyllum nodosum et les espèces du genre fucus.

5. Procédé de préparation d'une poudre de macroalgues brunes selon l'une quelconque des revendications 1 à 4, **caractérisé en ce que** le taux d'humidité résiduel de ladite poudre est compris entre 7 et 45%.

6. Procédé de préparation d'une poudre de macroalgues brunes selon l'une quelconque des revendications 1 à 5, **caractérisé en ce que** la densité de ladite poudre est comprise entre 0,4 et 0,8.

7. Procédé de préparation d'une poudre de macroalgues brunes selon l'une quelconque des revendications 1 à 6, **caractérisé en ce qu'**il comprend une étape d'ajout d'un colorant ou de pigments colorés audit résidu lors de l'étape de broyage dudit résidu dans des proportions comprises entre 0,5 et 5% en masse de la masse totale dudit résidu.

8. Procédé de préparation d'une poudre de macroalgues brunes selon l'une quelconque des revendications 1 à 7, **caractérisé en ce qu'**il comprend une étape d'ajout audit résidu, lors de l'étape de broyage dudit résidu, d'un agent absorbant d'odeur ou d'un agent odorant apte à éliminer ou à masquer l'odeur dudit résidu dans des proportions comprises entre 0,5 et 5% en masse de la masse totale dudit résidu.

9. Procédé de préparation d'une poudre de macroalgues brunes selon l'une quelconque des revendications 1 à 8, **caractérisé en ce qu'**il comprend une étape d'ajout audit résidu, lors de ladite étape de broyage, de 0,3 à 2% en masse d'albumine rapportée à la masse totale dudit résidu.

10. Procédé de préparation d'une poudre de macroalgues brunes selon l'une quelconque des revendications 1 à 9, **caractérisé en ce qu'**il comprend une étape de mélange, par barattage, desdites macroalgues traitées par des acides faibles ou desdites macroalgues broyées avec au moins un additif appartenant au groupe comprenant au moins :
- colorant ;
- pigment coloré ;
- agent absorbant d'odeur ;
- agent odorant ;
- albumine ;
- acide ;
- enzyme ;
- tensio-actif.

11. Procédé de fabrication d'un objet rigide à partir d'une poudre produite à partir de macroalgues brunes traitées par des acides faibles, ladite poudre présentant une granulométrie comprise entre 0,5 et 1,5 millimètre et un taux humidité résiduelle inférieur ou égal à 45%, **caractérisé en ce qu'**il comprend une étape de thermo-compression de ladite poudre dans un moule, ladite poudre étant portée à une température comprise entre 50 et 180°C, de préférence entre 60 et 160°C, et soumise à une pression comprise entre 400 et 4000 bars pendant 50 à 200 secondes.

12. Procédé de fabrication d'un objet rigide selon la revendication 11, **caractérisé en ce qu'**il comprend une étape d'application au moins partielle d'une laque hydrofuge sur la surface de la poudre thermo-compressée.

## Patentansprüche

1. Verfahren zur Herstellung eines braunen Makroalgenpulvers, das zur Herstellung von starren Objekten bestimmt ist, **dadurch gekennzeichnet, dass** es die folgenden Schritte in dieser Reihenfolge umfasst:
- Ernten und Waschen der braunen Makroalgen;
- Behandeln der braunen Makroalgen mit schwachen Säuren, wie beispielsweise Essigsäure oder Citronensäure, oder in Wasser verdünnten Säuren, durch Eintauchen der Makroalgen in ein Bad aus schwacher Säure oder in Wasser verdünnter Säure und/oder durch Zerstäuben der schwachen Säure oder der in Wasser verdünnten Säure auf den Mikroalgen;
- Zerkleinern der braunen Makroalgen;
- Filtern um einen Rückstand aus nicht solubilisierten Algen zu extrahieren;
- Zerkleinern des Rückstands, dann Trocknen des Rückstands für 5 bis 48 Stunden bei einer Temperatur im Bereich zwischen 30 °C und 60 °C, um ein Pulver mit einer Korngröße im Bereich zwischen 0,5 und 1,5 Millimeter, mit einem Restfeuchtegehalt kleiner oder gleich 45 %, bevorzugt kleiner oder gleich 26 %, zu erhalten.

2. Verfahren zur Herstellung eines braunen Makroalgenpulvers nach Anspruch 1, **dadurch gekennzeichnet, dass** der extrahierte Rückstand aus nicht solubilisierten Algen einen Feuchtegehalt größer oder gleich 30 % aufweist.

3. Verfahren zur Herstellung eines braunen Makroalgenpulvers nach einem der Ansprüche 1 und 2, **dadurch gekennzeichnet, dass** die Makroalgen aus den braunen Algen der Ordnung der Laminariales oder der Ordnung der Fucales ausgewählt sind.

4. Verfahren zur Herstellung eines braunen Makroalgenpulvers nach Anspruch 3, **dadurch gekennzeichnet, dass** die Makroalgen aus den Spezies Laminaria digitata, Ascophyllum nodosum und den Spezies der Gattung Fucus ausgewählt sind.

5. Verfahren zur Herstellung eines braunen Makroalgenpulvers nach einem der Ansprüche 1 bis 4, **dadurch gekennzeichnet, dass** der Restfeuchtegehalt des Pulvers im Bereich zwischen 7 und 45 % liegt.

6. Verfahren zur Herstellung eines braunen Makroalgenpulvers nach einem der Ansprüche 1 bis 5, **dadurch gekennzeichnet, dass** die Dichte des Pulvers im Bereich zwischen 0,4 und 0,8 liegt.

7. Verfahren zur Herstellung eines braunen Makroalgenpulvers nach einem der Ansprüche 1 bis 6, **dadurch gekennzeichnet, dass** es einen Schritt zum Zugeben eines Farbstoffs oder von farbigen Pigmenten zu dem Rückstand während des Schritts zum Zerkleinern des Rückstand in Anteilen im Bereich zwischen 0,5 und 5 Gew.-% des Gesamtgewichts des Rückstands umfasst.

8. Verfahren zur Herstellung eines braunen Makroalgenpulvers nach einem der Ansprüche 1 bis 7, **dadurch gekennzeichnet, dass** es einen Schritt zum Zugeben zu dem Rückstand, während des Schritts zum Zerkleinern des Rückstands, eines Geruchsabsorptionsmittels oder eines Odoriermittels, dass geeignet ist, den Geruch des Rückstands zu entfernen oder zu maskieren, in Anteilen im Bereich zwischen 0,5 und 5 Gew.-% des Gesamtgewichts des Rückstands umfasst.

9. Verfahren zur Herstellung eines braunen Makroalgenpulvers nach einem der Ansprüche 1 bis 8, **dadurch gekennzeichnet, dass** es einen Schritt zum Zugeben zu dem Rückstand, während des Schritts zum Zerkleinern, von 0,3 bis 2 Gew.-% Albumin, bezogen auf das Gesamtgewicht des Rückstands, umfasst.

10. Verfahren zur Herstellung eines braunen Makroalgenpulvers nach einem der Ansprüche 1 bis 9, **dadurch gekennzeichnet, dass** es einen Schritt zum Mischen, durch Kirnen der mit schwachen Säuren behandelten Makroalgen oder der zerkleinerten Makroalgen mit mindestens einem Zusatzstoff umfasst, der zur folgenden Gruppe gehört, die mindestens:
- Farbstoff;
- farbiges Pigment;
- Geruchsabsorptionsmittel;
- Odoriermittel;
- Albumin;
- Säure;
- Enzym;
- Tensid, umfasst.

11. Verfahren zur Fertigung eines starren Objekts aus einem Pulver, das aus mit schwachen Säuren behandelten braunen Makroalgen hergestellt wurde, wobei das Pulver eine Korngröße im Bereich zwischen 0,5 und 1,5 Millimeter und einen Restfeuchtegehalt kleiner oder gleich 45 % aufweist, **dadurch gekennzeichnet, dass** es einen Schritt zum thermischen Verdichten des Pulvers in einer Form umfasst, wobei das Pulver auf eine Temperatur im Bereich zwischen 50 und 180 °C, bevorzugt zwischen 60 und 160 °C, gebracht wird und mit einem Druck im Bereich zwischen 400 und 4.000 bar für 50 bis 200 Sekunden beaufschlagt wird.

12. Verfahren zur Fertigung eines starren Objekts nach Anspruch 11, **dadurch gekennzeichnet, dass** es einen Schritt zum mindestens teilweisen Auftragen eines wasserabweisenden Lacks auf die Oberfläche des thermisch verdichteten Pulvers umfasst.

## Claims

1. A method for preparing a powder from brown macroalgae, intended for the fabrication of rigid objects, **characterized in that** the method comprises the following steps, in this order:
- harvesting and washing said brown macroalgae;
- treating said brown macroalgae with weak acids, such as acetic acid or citric acid, or acids diluted in water by immersion of said macroalgae in a weak acid bath or acid diluted in water and/or by spraying said weak acid or said acid diluted in water onto said macroalgae;
- grinding said brown macroalgae;
- filtration, so as to extract a residue of non-solubilized algae;
- grinding said residue and then drying said residue for 5 to 48 hours at a temperature of between 30° C and 60° C, so as to obtain a powder with a particle size of between 0.5 and 1.5 millimeters and presenting a residual moisture content less than or equal to 45%, preferably less or equal to 26%.

2. The method of preparing a powder from brown macroalgae according to claim 1, **characterized in that** said residue of non-solubilized algae extract presents a moisture content equal to or greater than 30%.

3. The method of preparing a powder from brown macroalgae according to any one of claims 1 and 2, **characterized in that** said macroalgae are chosen from among brown algae from the order laminariales or from the order fucales.

4. The method of preparing a powder from brown macroalgae according to claim 3, **characterized in that** said macroalgae are selected from the species laminaria digitata and ascophyllum nodosum and species from the fucus genus.

5. The method of preparing a powder from brown macroalgae according to any one of claims 1 to 4, **characterized in that** the residual moisture content of said powder is between 7 and 45%.

6. The method of preparing a powder from brown macroalgae according to any one of claims 1 to 5, **characterized in that** the density of said powder is between 0.4 and 0.8%.

7. The method of preparing a powder from brown macroalgae according to any one of claims 1 to 6, **characterized in that** the method comprises a step of adding a dye or color pigments to said residue during the step of grinding said residue in proportions of between 0.5 and 5% by mass of the total mass of said residue.

8. The method of preparing a powder from brown macroalgae according to any one of claims 1 to 7, **characterized in that** the method comprises a step of adding to said residue an odor absorbing or odorizing agent, able to eliminate or mask the odor of said residue, during the step of grinding the residue in proportions of between 0.5 and 5% by mass of the total mass of said residue.

9. The method of preparing a powder from brown macroalgae according to any one of claims 1 to 8, **characterized in that** the method comprises a step of adding albumin to said residue during said grinding step, from 0.3 to 2% by mass compared to the total mass of said residue.

10. The method of preparing a powder from brown macroalgae according to any one of claims 1 to 9, **characterized in that** the method comprises a step of mixing, by churning, said macroalgae treated by weak acids or said ground macroalgae with at least one additive belonging to the group comprising at least:
- dye;
- colored pigment;
- odor absorbing agent;
- odorizing agent;
- albumin;
- acid;
- enzyme;
- surfactant.

11. A method of fabricating a rigid object from a powder produced from brown macroalgae treated with weak acids, said powder presenting a particle size of between 0.5 and 1.5 millimeters and a residual moisture content of less than or equal to 45%, **characterized in that** the method comprises a step of thermocompressing said powder in a mold, said powder being brought to a temperature of between 50 and 180° C, preferably between 60 and 160° C, and subjected to pressure of between 400 and 4000 bar for 50 to 200 seconds.

12. The method of fabricating a rigid object according to claim 11, **characterized in that** the method comprises a step of at least partially applying a water-repellant lacquer on the surface of the thermocompressed powder.
